Europäisches Patentamt

European Patent Office

Office européen des brevets

(19)

(11) Veröffentlichungsnummer : **0 387 633 B1**

(12)

# EUROPÄISCHE PATENTSCHRIFT

(45) Veröffentlichungstag der Patentschrift :
**10.02.93 Patentblatt 93/06**

(51) Int. Cl.$^5$ : **F24D 3/10**

(21) Anmeldenummer : **90104081.6**

(22) Anmeldetag : **02.03.90**

(54) **Einrichtung zum Transport von Wärme für Heiz- bzw. Kühlzwecke.**

(30) Priorität : **13.03.89 AT 563/89**

(43) Veröffentlichungstag der Anmeldung :
**19.09.90 Patentblatt 90/38**

(45) Bekanntmachung des Hinweises auf die
Patenterteilung :
**10.02.93 Patentblatt 93/06**

(84) Benannte Vertragsstaaten :
**AT BE CH DE FR LI LU NL**

(56) Entgegenhaltungen :
**FR-A- 2 503 843**

(56) Entgegenhaltungen :
**FR-A- 2 515 797**
**FR-A- 2 570 475**
**FR-A- 2 628 828**
**FR-A- 2 634 873**

(73) Patentinhaber : **Zortea, Rembert**
**Rudolf v. Ems-Strasse 32**
**A-6845 Hohenems (AT)**

(72) Erfinder : **Zortea, Rembert**
**Rudolf v. Ems-Strasse 32**
**A-6845 Hohenems (AT)**

(74) Vertreter : **Hefel, Herbert, Dipl.-Ing.**
**Egelseestrasse 65a**
**A-6800 Feldkirch-Tosters (AT)**

EP 0 387 633 B1

## Beschreibung

Die Erfindung bezieht sich auf eine Einrichtung zum Transport von Wärme für Heiz- bzw. Kühlzwecke mit mindestens einem Wärmetauscher, über welchen einem Wärmetransportmedium zu Heizzwecken Wärme zugeführt bzw. zu Kühlzwecken Wärme entnommen wird mit den Merkmalen des Oberbegriffes des Patentanspruches 1.

Anlagen und Einrichtungen dieser Art sind in vielen Ausführungsvarianten bekannt. Ein Problem, das mit Anlagen und Einrichtungen dieser Art verbunden ist, besteht darin, daß die einzelnen Kreise, die für Heizzwecke dienen bzw. die die Verlustwärme erzeugen, auf sehr unterschiedlichem Temperaturniveau liegen. Wird beispielsweise ein großer Gewerbebetrieb oder gar ein Fabriksbetrieb ins Auge gefaßt, so gibt es hier einen Heizkreis zur Erzeugung von Brauchwasser, das etwa auf ca. 50 ° aufgeheizt wird; die Verwaltungsräume der Anlage sind mit einer Fußbodenheizung ausgestattet, deren Temperaturniveau bei ca. 30 - 40 ° liegt; dann gibt es eine Radiatorenheizung in Werkräumen mit einem Temperaturniveau von ca. 75 - 55 ° und schlußendlich eventuell noch eine Klimaanlage für Lagerräume, deren Temperaturniveau auf ca. 70 - 80 ° liegen kann. Dem gegenüber steht das Faktum, daß das Wärmetransportmedium aller Kreise einen Wärmetauscher durchfließt, in welchem diesem Transportmedium die für Heizzwekke notwendige Wärme zugeleitet wird. Wird dieser Wärmetauscher primärseitig beispielsweise über ein Fernheizwerk gespeist, so ist darauf Bedacht zu nehmen, daß das vom Fernheizwerk kommende Wärmeträgermedium in diesem Wärmetauscher um ein erhebliches vorgegebenes Maß abgekühlt wird, um so zwischen Vorlauf und Rücklauf der vom Fernheizwerk kommenden Leitungen eine große Temperaturdifferenz zu erhalten, welche einerseits für die Tarifgestaltung gegenüber dem Abnehmer sich als günstig erweist und welche auch für eine optimale Nutzung (Wirkungsgrad) des Fernheizwerkes wesentlich ist.

Dienen die erwähnten Kreise dazu, beispielsweise die in Werkzeug- oder Arbeitsmaschinen anfallende Wärme (Verlustwärme) abzuführen, so liegen auch hier in der Regel verschiedene Kreise auf sehr verschiedenem Temperaturniveau vor, deren Wärmetransportmedium in einem Wärmetauscher rückgekühlt werden soll. Der Wirkungsgrad des Wärmetauschers, der die Verlustwärme schlußendlich abführt und durch den das Wärmetransportmedium aller dieser Kreise mit unterschiedlichem Temperaturniveau führt, hängt ebenfalls von dessen Temperaturniveau ab, so daß auch hier danach getrachtet wird, zwischen Vorlauf und Rücklauf eine möglichst große Temperaturdifferenz zu erreichen.

Die Lösung dieser Aufgabe gelingt nun durch jene Maßnahmen, die Inhalt und Gegenstand des kennzeichnenden Teiles des Patentanspruches 1 sind.

Um die Erfindung in ihren Anwendungsmöglichkeiten zu veranschaulichen, werden anhand der Zeichnung Ausführungsbeispiele näher erläutert. Es zeigen:

Fig. 1 ein Schaltschema einer Heizanlage, die von einem Fernheizwerk primärseitig gespeist ist;

Fig. 2 ein Schaltschema einer Kühlanlage in Verbindung mit mehreren Arbeitsmaschinen, die Verlustwärme erzeugen;

Fig. 3 eine schematische Schnittdarstellung durch den turmartigen Behälter.

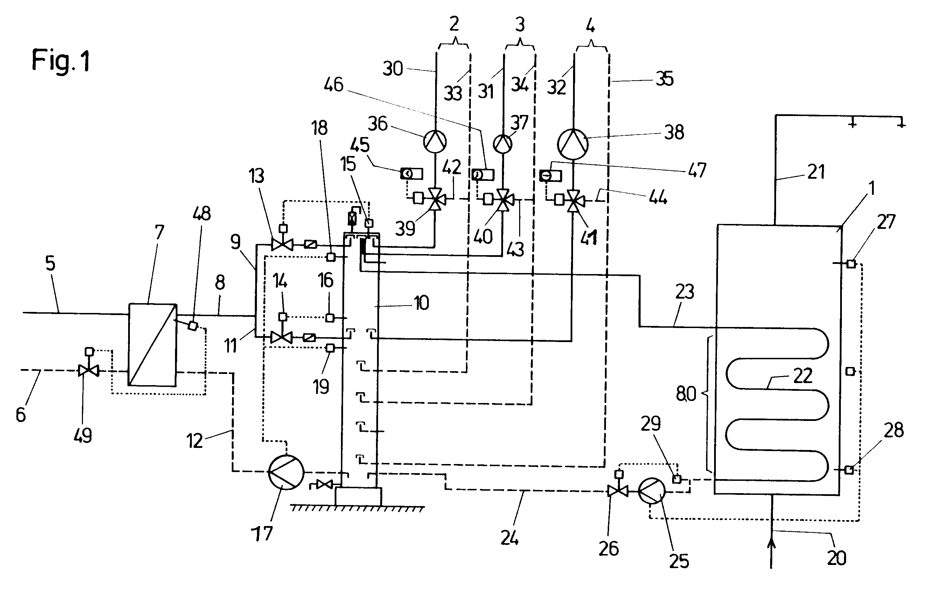

Fig. 1 veranschaulicht die Heizanlage eines Fabriksbetriebes mit einem Speicherbehälter 1 für die Warmwasserbereitung für Gebrauchszwecke, der einen Heizkreis 80 darstellt. Ferner ist ein Heizkreis 2 vorgesehen für die Klimaanlage, ein Heizkreis 3 für die Radiatorenheizung und ein Heizkreis 4 für die Bodenheizung. Die Wärme, die für diese Anlage benötigt wird, wird von einem hier nichtdargestellten Fernheizwerk über eine Vorlaufleitung 5 und eine Rücklaufleitung 6 über einen Wärmetauscher 7 geführt. Die mit dem Fernheizwerk verbundene Seite des Wärmetauschers 7 ist die Primärseite, die mit der Heizanlage verbundene Seite des Wärmetauschers 7 die Sekundärseite. Zwischen diesem Wärmetauscher 7 und den Heizkreisen 2, 3, 4 und 80 ist nun ein turmartiger Behälter 10 vorgesehen, dessen Höhe ein mehrfaches seines Durchmessers beträgt, beispielsweise das Sieben- bis Zehnfache. Von der Sekundärseite des Wärmetauschers 7 geht eine Vorlaufleitung 8 aus, die über zwei Zweige 9 und 11 mit diesem Behälter 10 verbunden ist, wobei der eine Zweig 9 im oberen Bereich und der andere Zweig 11 etwa im Mittelbereich des Behälters 10 in diesen mündet. Die Rücklaufleitung 12 führt aus dem Bodenbereich des Behälters 10 zurück zum Wärmetauscher 7. In den beiden Zweigen 9 und 11 der Vorlaufleitung 8 sind Regelventile 13 und 14 vorgesehen, die von im Behälter 10 angeordneten Thermostaten 15, 16 gesteuert werden, wobei dem Regelventil 13 im oberen Zweig 9 ein im Behälter 10 oben angeordneter Thermostat 15 und dem Regelventil 14 im unteren Zweig 11 ein im Behälter 10 im Mündungsbereich dieser Leitung liegender Thermostat 16 zugeordnet sind. Ferner liegt in diesem aus Vorlauf- und Rücklaufleitung 8 und 12 bestehenden Kreis eine Umlaufpumpe 17, welche von zwei in unterschiedlichen Höhen des Behälters 10 angeordneten Thermostaten 18 und 19 gesteuert ist.

Der Speicherbehälter 1 für die Warmwasserbereitung im Heizkreis 80 hat eine Kaltwasserzuführleitung 20 und eine Warmwasserentnahmeleitung 21. Die eine ist am Speicherbehälter 1 unten, die andere am Speicherbehälter oben angeschlossen. Die Wärmetauscherschlange 22 in diesem Speicherbehälter 1 besitzt eine Vorlaufleitung 23 und eine Rücklaufleitung 24, wobei auch in diesem Kreis eine Umlaufpumpe 25 und ein Regelventil 26 vorgesehen sind. Die Umlaufpumpe 25 ist von Thermostaten 27 und 28 gesteuert, die die Temperatur des Brauchwassers im Speicherbehälter 1 messen, und das Regelventil 26 ist über den Thermostaten 29 von der Temperatur des Wärmetransportmediums in der Rücklaufleitung 24 gesteuert.

Auch die Heizkreise 2, 3 und 4 besitzen je eine Vorlaufleitung 30, 31, 32 und eine Rücklaufleitung 33, 34, 35 sowie je eine Umlaufpumpe 36, 37, 38 und je ein Mischventil 39, 40, 41 und eine Querverbindungsleitung 42, 43, 44 sowie Temperatureinstellgeräte 45, 46, 47.

Das Temperaturniveau der einzelnen Heizkreise ist unterschiedlich, das des Kreises 2 ist größer als jenes des Kreises 3 und dieses wiederum größer als jenes des Heizkreises 4. Kreis 2 dient zur Speisung einer Klimaanlage, Kreis 3 der Speisung einer Radiatorenheizung und Kreis 4 der Speisung einer Fußbodenheizung. Das Temperaturniveau des Heizkreises 80 für die Brauchwasserbereitung liegt zwischen jenen der Kreise 2 und 3.

Diese Temperaturniveaus bestimmen nun die Anschlußhöhen der Vorlaufleitungen bzw. Rücklaufleitungen dieser Kreise am turmartigen Behälter 10. Die Vorlaufleitungen 30, 31 und 23 der Kreise mit relativ hohem Temperaturniveau liegen im oberen Bereich des Behälters 10; die Vorlaufleitung 32 des Kreises mit geringerem Temperaturniveau liegt im Mittelbereich des Behälters 10, die Rücklaufleitungen aller Kreise münden im unteren Bereich in diesen Behälter 10.

Die Dichte des Wärmetransportmediums ist in erheblichem Maße temperaturabhängig. In der Regel wird Wasser als Wärmetransportmittel verwendet. Warmes Wasser ist leicht und steigt hoch, kaltes Wasser ist schwer und sinkt ab. Es bildet sich im Behälter 10, insbesondere durch dessen turmartigen Aufbau unterstützt, eine Wassersäule mit markanter Temperaturschichtung, so daß diesem turmartigen Behälter 10, obwohl er nur von einem Wärmetauscher 7 gespeist ist, für die einzelnen Heizkreise, insbesondere deren Vorlaufleitungen, Wasser als Wärmetransportmittel unterschiedlicher Temperatur entnommen werden kann, so daß die einzelnen Kreise temperaturmäßig optimal beliefert sind. Die den einzelnen Heizkreisen 2, 3, 4 zugeordneten Mischventile 39, 40 und 41 und die damit in Verbindung stehenden Querleitungen 42, 43, 44 dienen der zusätzlichen Regelung.

Die Temperatur des Wärmeträgermediums auf der Sekundärseite des Wärmetauschers 7 wird über einen hier angeordneten Thermostaten 48 überwacht, der das in der Rücklaufleitung 6 zum Fernheizwerk angeordnete Regelventil 49 steuert.

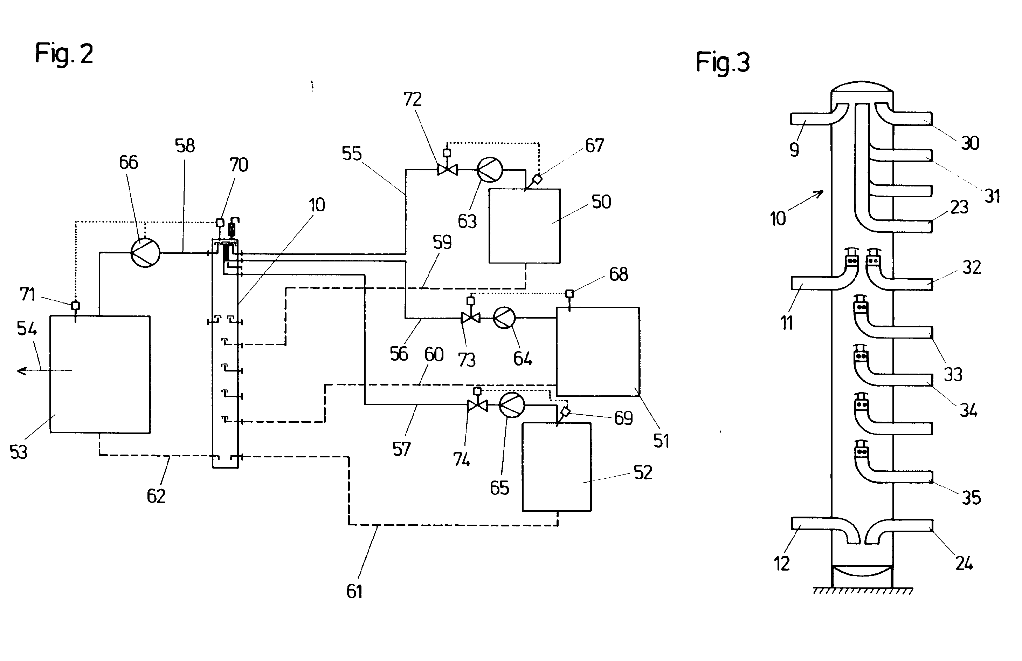

Fig. 3 zeigt schematisch den turmartigen Behälter 10 mit den verschiedenen Rohranschlüssen im Längsschnitt, wobei aus dieser Zeichnung auch ersichtlich ist, daß die inneren Rohrenden dieser Vor- und Rücklaufleitungen nach oben gerichtet sind und die jeweilige Mündungsöffnung noch mit einem Verteilblech bestückt sind, um das austretende Wasser über die Breite des Behälters 10 zu verteilen bzw. das abzuführende und-/oder abzuleitende Wasser über die Breite des Behälters 10 abgezogen wird.

Beim betriebsmäßigen Einsatz bildet sich im turmartigen Behälter 10 eine Wassersäule (Wärmetransportmedium) mit einer ausgeprägten Temperaturschichtung. Warmes bzw. heißes Wasser befindet sich oben im Behälter 10, kaltes Wasser befindet sich unten. Dies, obgleich dieser turmartige Behälter 10 nur von einem Wärmetauscher 7 gespeist ist. Die Vorlaufleitungen der Heizkreise 2, 3 und 80, die auf relativ hohem Temperaturniveau gefahren werden, münden daher im oberen Bereich dieses Behälters 10, wogegen die Vorlaufleitung des Heizkreises 4 mit niedrigerem Temperaturniveau vom Mittelbereich dieses turmartigen Behälters 10 ausgeht mit der Folge, daß jedem Heizkreis entsprechend seinem Temperaturniveau Vorlaufwasser unterschiedlicher Temperatur zur Verfügung steht.

Fig. 2 veranschaulicht schematisch eine Kühlanlage für mehrere Werkzeugmaschinen 50, 51, 52, beispielsweise Spritzgußautomaten unterschiedlicher Größe und Kapazität. Die in diesen Werkzeugmaschinen 50, 51, 52 beim betriebsmäßigen Einsatz erzeugte Verlustwärme wird über einen zentralen Wärmetauscher 53 abgeführt (Pfeil 54), wobei es in diesem Zusammenhang nicht weiter von Bedeutung ist, ob diese Verlustwärme (Pfeil 54) an die Luft abgegeben wird, oder aber für Heizzwecke weiterverwendet wird. Die einzelnen Kreise für das Wärmetransportmedium weisen auch hier Vorlaufleitungen 55, 56, 57 sowie 58 und Rücklaufleitungen 59, 60, 61, 62 auf, wobei auch hier wieder diesen einzelnen Kreisen Umlaufpumpen 63, 64, 65, 66, Steuerthermostaten 67, 68, 69, 70, 71 und Regelventile 72, 73, 74 zugeordnet sind. Auch für diese Kühlanlage ist charakteristisch, daß zwischen den Verlustwärme erzeugenden Einrichtungen 50, 51, 52 und dem wärmeabführenden Wärmetauscher 53 ein turmartiger Behälter 10 vorgesehen ist, in welche die Vorlauf- und Rücklaufleitungen dieser Kreise entsprechend dem jeweiligen Temperaturniveau an unterschiedlichen Höhen angeschlossen sind, je nach dem, wie viel Wärme auf welchem Temperaturniveau abgeführt werden soll. Auch der hier vorgesehene turmartige Behälter 10 ist in der Weise dimensioniert, wie dies im Zusammenhang mit dem Schaltschema nach Fig. 1 erläutert worden ist.

Ist im Ausführungsbeispiel nach Fig. 1 die Vorlaufleitung 8 zum turmartigen Behälter 10 in zwei Zweige 9 und 11 unterteilt, so sei ergänzend vermerkt, daß anstelle von zwei Zweigen auch mehrere Zweige vorgesehen sein können, wobei die einzelnen Zweige jeweils in verschiedenen Höhen am Behälter 10 angeschlossen sind und jedem Zweig ein stetig arbeitendes Regelventil und ein Thermostat zugeordnet ist. Die Regelventile 13, 14, 26, 39, 40, 41, 49 in dieser Anlage sind als stetig arbeitende Ventile ausgebildet. Sie haben die Aufgabe, dafür zu sorgen, daß dem turmartigen Behälter stets nur das Wärmetransportmedium mit der tiefstmöglichen Temperatur über die Rücklaufleitung zugeleitet wird, um auf diese Weise die gewünschte Schichtung innerhalb des Behälters 10 sicherzustellen. Was die Temperaturen in dieser in Fig. 1 dargestellten Anlage betrifft, so ist beispielsweise die Vorlauftemperatur in der Leitung 5 mit 115 °C vom Fernheizwerk vorgegeben. Der Thermostat 48 im Wärmespeicher 7 ist auf 70 °C eingestellt, die Thermostaten 15 und 16 im turmartien Behälter 10 auf 70 bzw. 40 °C. Die Vorlaufleitung 13 zum Speicherbehälter 1 führt das Wärmetransportmedium mit einer Temperatur von 70 °C.

Handelt es sich bei einem der Heizkreise, die am turmartigen Behälter 10 angeschlossen sind, um einen solchen, der nicht nur eine hohe Vorlauftemperatur sondern auch eine hohe Rücklauftemperatur besitzt, wie dies beispielsweise bei der Speisung von Heißhaltegeräten für Großküchen der Fall ist, so münden sowohl die Vorlaufleitung wie auch die Rücklaufleitung im oberen Bereich des Behälters 10, wobei in diesem Fall für die Rücklaufleitung kein temperaturgesteuertes, stetig arbeitendes Regelventil unbedingt notwendig ist.

Was im Zusammenhang mit der Fig. 1 über die Regelventile ausgesagt wird, gilt auch für die Regelventile 72, 73 und 74 der Anlage nach Fig. 2. Auch die hier dargestellten Regelventile arbeiten stetig und gewährleisten so, daß das Kühlmedium hier mit der maximal höchsten Temperatur dem turmartigen Behälter 10 zugeleitet wird.

Dank des zwischengeschalteten turmartigen Behälters 10 und den hier vorgesehenen Anschlüssen der Vor- und Rücklaufleitungen finden die entsprechenden Heizbzw. Kühlkreise temperaturmäßig gesehen optimale Ausgangssituationen vor, obgleich in beiden Fällen jeweils nur ein Wärmetauscher für die Zufuhr bzw. Abfuhr der anfallenden Wärme vorgesehen ist.

| | | | |
|---|---|---|---|
| 1 | Speicherbehälter | 26 | Regelventil |
| 2 | Heizkreis | 27 | Thermostat |
| 3 | Heizkreis | 28 | Thermostat |
| 4 | Heizkreis | 29 | Thermostat |
| 5 | Vorlaufleitung | 30 | Vorlaufleitung |
| 6 | Rücklaufleitung | 31 | Vorlaufleitung |
| 7 | Wärmetauscher | 32 | Vorlaufleitung |
| 8 | Vorlaufleitung | 33 | Rücklaufleitung |
| 9 | Zweig | 34 | Rücklaufleitung |
| 10 | Turmartiger Behälter | 35 | Rücklaufleitung |
| 11 | Zweig | 36 | Umlaufpumpe |
| 12 | Rücklaufleitung | 37 | Umlaufpumpe |
| 13 | Regelventil | 38 | Umlaufpumpe |
| 14 | Regelventil | 39 | Mischventil |
| 15 | Thermostat | 40 | Mischventil |
| 16 | Thermostat | 41 | Mischventil |
| 17 | Umlaufpumpe | 42 | Verbindungsleitung |
| 18 | Thermostat | 43 | Verbindungsleitung |
| 19 | Thermostat | 44 | Verbindungleitung |
| 20 | Kaltwasserzuführleitung | 45 | Temperatureinstellgerät |
| 21 | Warmwasserentnahmeleitung | 46 | Temperatureinstellgerät |
| 22 | Wärmetauscherschlange | 47 | Temperatureinstellgerät |
| 23 | Vorlaufleitung | 48 | Thermostat |
| 24 | Rücklaufleitung | 49 | Regelventil |
| 25 | Umlaufpumpe | 50 | Werkzeugmaschine |

| 51 | Werkzeugmaschine | 76 | |
| 52 | Werkzeugmaschine | 77 | |
| 53 | Wärmetauscher | 78 | |
| 54 | Pfeil | 79 | |
| 55 | Vorlaufleitung | 80 | Heizkreis |
| 56 | Vorlaufleitung | | |
| 57 | Vorlaufleitung | | |
| 58 | Vorlaufleitung | | |
| 59 | Rücklaufleitung | | |
| 60 | Rücklaufleitung | | |
| 61 | Rücklaufleitung | | |
| 62 | Rücklaufleiutng | | |
| 63 | Umlaufpumpe | | |
| 64 | Umlaufpumpe | | |
| 65 | Umlaufpumpe | | |
| 66 | Umlaufpumpe | | |
| 67 | Thermostat | | |
| 68 | Thermostat | | |
| 69 | Thermostat | | |
| 70 | Thermostat | | |
| 71 | Thermostat | | |
| 72 | Regelventil | | |
| 73 | Regelventil | | |
| 74 | Regelventil | | |
| 75 | | | |

## Patentansprüche

1. Einrichtung zum Transport von Wärme für Heiz- bzw. Kühlzwecke mit mindestens einem Wärmetauscher (7, 53), über welchen einem Wärmetransportmedium zu Heizzwecken Wärme zugeführt (Fig 1) bzw. zu Kühlzwecken Wärme entnommen wird (Fig. 2) und der Wärmetauscher (7, 53) mit einer Mehrzahl von in sich geschlossenen, vom Wärmetransportmedium durchflossenen Kreisen verbunden ist und Wärmetauscher und Kreise Vorlauf- und Rücklaufleitungen für das Wärmetransportmedium besitzen, dadurch gekennzeichnet, daß zwischen dem Wärmetauscher (7, 53) und den Kreisen ein turmartiger Behälter (10) vorgesehen ist, wobei die Vorlaufleitung (8, 58) des Wärmetauschers (7, 53) im oberen Bereich und die Rücklaufleitung (12, 62) des Wärmetauschers (7, 53) im unteren Bereich in den turmartigen Behälter (10) mündet und die Vorlaufleitungen und die Rücklaufleitungen der einzelnen Kreise in verschiedenen Höhen des Behälters (10) angeschlossen sind, wobei die Vorlaufleitungen der Kreise mit hohem Temperaturniveau im oberen Bereich des turmartigen Behälters (10) und die Vorlaufleitungen der Kreise mit niedrigem Temperaturniveau an tieferen Stellen des Behälters (10), vorzugsweise in dessen Mittelbereich angeschlossen sind und zumindest die überwiegende Anzahl der Anschlüsse der Rücklaufleitungen dieser Kreise in der unteren Hälfte des Behälters (10) vorgesehen sind.

2.  Einrichtung nach Anspruch 1 zur verbraucherseitigen Wärmeübergabe in Verbindung mit Fernheizwerken, wobei verbraucherseitig ein mit dem Fernheizwerk über mindestens eine Vorlaufleitung (5) und mindestens über eine Rücklaufleitung (6) für das Wärmetransportmedium verbundene Wärmetauscher (7) vorgesehen sind und der sekundärseitig ebenfalls von einem Wärmetransportmedium durchflossene Wärmetauscher (7) mit einer Mehrzahl von in sich geschlossenen Heizkreisen (2, 3, 4) unterschiedlichen Temperaturniveaus verbunden ist und jeder dieser Heizkreise eine Vorlaufleitung (23, 30, 31 und 32) und eine Rücklaufleitung (24, 33, 34, 35) und vorzugsweise eine Umlaufpumpe sowie temperaturabhängige Steuerungseinrichtungen aufweist, dadurch gekennzeichnet, daß an der Sekundärseite des vom Fernheizwerk gespeisten Wärmetauschers (7) ein mit diesem über mindestens eine Vorlaufleitung (8) und mindestens eine Rücklaufleitung (12) verbundener turmartiger Behälter (10) angeschlossen ist, dessen Höhe ein Mehrfaches seiner Basis beträgt, wobei die vom Wärmetauscher (7) kommende Vorlaufleitung (8) im oberen Bereich dieses Behälters (10) und die Rücklaufleitung (12) im unteren Bereich des Behälters (10) angeschlossen ist und die Vorlaufleitungen der Heizkreise und deren Rücklaufleitungen in verschiedenen Höhen des Behälters (10) angeschlossen sind, wobei die Vorlaufleitung der Heizkreise mit hohem Temperaturniveau im oberen Bereich des Behälters (10) und die Vorlaufleitungen der Heizkreise mit niedrigem Temperaturniveau an tieferen Stellen des Behälters (10), vorzugsweise in desen Mittelbereich angeschlossen sind und zumindest die überwiegende Anzahl der Anschlüsse der Rücklaufleitungen dieser Heizkreise in der unteren Hälfte des Behälters (10) vorgesehen sind.

3.  Einrichtung nach Anspruch 2, dadurch gekennzeichnet, daß die Vorlaufleitung (8), die von dem durch das Fernheizwerk gespeisten Wärmetauscher (7) zum turmartigen Behälter (10) führt, in mehrere Zweige (9, 11) aufgeteilt ist, die in unterschiedlichen Höhen in den Behälter (10) münden.

4.  Einrichtung nach Anspruch 1, dadurch gekennzeichnet, daß der überwiegende Teil der im turmartigen Behälter (10) liegenden Rohrenden der Vor- und Rücklaufleitungen nach oben gerichtete, mit Verteilerblechen überdeckte Mündungsöffnungen aufweisen (Fig. 3).

5.  Einrichtung nach einem der Ansprüche 1 bis 4, dadurch gekennzeichnet, daß in der Vor- bzw. Rücklaufleitungen der einzelnen Kreise temperaturgesteuerte Umlaufpumpen und/oder stetig arbeitende Regelventile angeordnet sind.

6.  Einrichtung nach einem der Ansprüche 1, 4 und 5, dadurch gekennzeichnet, daß die Höhe des turmartigen Behälters (10) ein mehrfaches seines Durchmessers beträgt.

7.  Einrichtung nach Anspruch 6, dadurch gekennzeichnet, daß das Verhältnis von Durchmesser zu Höhe des turmartigen Behälters (10) ca. 1 : 7 bis 1 : 10 beträgt.

## Claims

1.  Heat-transfer apparatus for heating or cooling purposes, having at least one heat exchanger (7, 53), by way of which heat is supplied to a heattransfer medium for heating purposes (Fig. 1) or is removed therefrom for cooling purposes (Fig. 2), and the heat exchanger (7, 53) is connected to a plurality of closed circuits, through which heat-transfer medium flows, and the heat exchanger and the circuits have feed and return lines for the heat-transfer medium, characterized in that a tower-like container (10) is provided between the heat exchanger (7, 53) and the circuits, the feed line (8, 58) of the heat exchanger (7, 53) opening into the tower-like container (10) in the upper region and the return line (12, 62) of the heat exchanger (7, 53) opening into the tower-like container (10) in the lower region, and the feed lines and the return lines of the individual circuits being connected at different levels of the container (10), the feed lines of the circuits at a high temperature level being connected in the upper region of the tower-like container (10) and the feed lines of the circuits at a low temperature level being connected at lower regions of the towerlike container (10), preferably in the central region thereof, and at least the predominant number of the connexions of the retum lines of these circuits being provided in the lower half of the container (10).

2.  Apparatus according to Claim 1 for transferring heat for consumption in conjunction with central heating plants, a heat exchanger (7) connected to the central heating plant by way of at least one feed line (5) and at least by way of one return line (6) for the heat-transfer medium being provided at the consumer side and the heat exchanger (7) -- through which a heat-transfer medium likewise flows on the secondary side -- being connected to a plurality of closed heating circuits (2, 3, 4) of different temperature levels, and each of the said heating circuits having a feed line (23, 30, 31 and 32) and a return line (24, 33, 34, 35) and preferably a circulating pump and temperaturedependent control devices, characterized in that a tower-like container (10), which is connected by way of at least one feed line (8) and at least one return line (12) to the heat exchanger (7) supplied by the central heating plant and the height of which is a multiple of its base, is connected to the secondary side of the said heat exchanger (7), wherein the feed line (8) arriving from the heat exchanger (7) is connected in the upper area of the said container (10) and the return line (12) is connected in the lower region of the container (10) and the feed lines of the heating circuits and the return lines thereof are connected at different levels of the container (10), the feed line of the heating circuits at a high temperature level being connected in the upper region of the container (10) and the feed lines of the circuits at a low temperature level being connected at lower regions of the container (10), preferably in the central region thereof, and at least the predominant number of the connexions of the return lines of these heating circuits being provided in the lower half of the container (10).

3. Apparatus according to Claim 2, characterized in that the feed line (8), leading from the heat exchanger (7) supplied by the central heating plant to the tower-like container (10) is divided into a plurality of branches (9, 11) opening into the container (10) at different heights.

4. Apparatus according to Clain 1, characterized in that the predominant part of the pipe ends of the feed and return lines situated in the tower-like container (10) have openings directed upwards and covered by distributor plates (Fig. 3).

5. Apparatus according to one of Claims 1 to 4, characterized in that temperature-controlled circulating pumps and/or continuously operating regulating valves are arranged in the feed and return lines of the individual circuits.

6. Apparatus according to one of Claims 1, 4 and 5, characterized in that the height of the tower-like container (10) is a multiple of its diameter.

7. Apparatus according to Claim 6, characterised in that the ratio of the diameter to the height of the tower-like container (10) is substantially from 1 : 7 to 1: 10.


**Revendications**

1. Dispositif de transport de chaleur à des fins de chauffage ou de refroidissement comprenant au moins un échangeur de chaleur (7, 53), par lequel de la chaleur est fournie à un agent de transport de chaleur à des fins de chauffage (figure 1) ou est retirée de cet agent à des fins de refroidissement (figure 2), l'échangeur de chaleur (7, 53) étant lié à une série de circuits fermés en soi parcourus par l'agent de transport de chaleur et l'échangeur et les circuits possédant des conduites d'amenée et de retour de l'agent de transport de chaleur, caractérisé en ce qu'il est prévu entre l'échangeur de chaleur (7, 53) et les circuits un réservoir en forme de tour (10), la conduite d'amenée (8, 58) de l'échangeur de chaleur (7, 53) débouchant dans la partie supérieure du réservoir en forme de tour (10) et la conduite de retour (2, 62) de l'échangeur de chaleur (7, 53) débouchant dans la partie inférieure de ce même réceptacle, et les conduites d'amenée et les conduites de retour des circuits individuels se raccordant à diverses hauteurs du réservoir (10), les conduites d'amenée des circuits à haut niveau de température se raccordant à la partie supérieure du réservoir en forme de tour (10) et les conduites d'amenée des circuits à bas niveau de température se raccordant à des points plus bas du réservoir (10), de préférence dans sa partie centrale, au moins le plus grand nombre des raccordements des conduites de retour de ces circuits étant prévus dans la moitié inférieure du réservoir (10).

2. Dispositif selon la revendication 1 pour la transmission de chaleur côté utilisateurs en liaison avec des installations de chauffage situées à distance, dans lequel côté utilisateurs sont prévus un échangeur de chaleur (7) relié aux installations de chauffage à distance par au moins une conduite d'amenée (5) et un échangeur de chaleur (7) également relié aux installations de chauffage à distance par au moins une conduite de retour (6) pour l'agent de transport de chaleur, l'échangeur de chaleur (7) également parcouru par un agent de transport de chaleur côté secondaire est relié à une série de circuits de chauffage (2, 3, 4) fermés en soi de différents niveaux de température et chacun de ces circuits de chauffage présente une conduite d'amenée (23, 30, 31 et 32) et une conduite de retour (24, 33, 34 et 35) et, de préférence, une pompe de circulation ainsi que des dispositifs de commande en fonction de la température, caractérisé en ce que sur le côté secondaire de l'échangeur de chaleur (7) alimenté par les installations de chauffage est raccordé un réservoir en forme de tour (10) relié à celle-ci par au moins une conduite d'amenée (8) et au moins une conduite de retour (12), dont la hauteur est un multiple de sa base, en sorte que la conduite d'amenée (8) venant de l'échangeur de chaleur (7) se raccorde à la partie supérieure de ce réservoir (10) et que la conduite de retour (12) se raccorde à la partie inférieure du réservoir (10) et que les conduites d'amenée des circuits de chauffage et leurs conduites de retour se raccordent à diverses hauteurs du réservoir (10), la conduite d'amenée des circuits de chauffage de haut niveau de température se raccordant à la partie supérieure du réservoir (10 et les conduites d'amenée des circuits de chauffage de bas niveau de température se raccordant à des points plus bas du réservoir (10), de préférence dans sa partie centrale, au moins le plus grand nombre de raccordements des conduites de retour de ces circuits de chauffage étant prévues dans la moitié inférieure du réservoir (10).

3.  Dispositif selon la revendication 2, caractérisé en ce que la conduite d'amenée (8) qui mène au réservoir en forme de tour (10) à partir de l'échangeur de chaleur (7) alimenté par les installations de chauffage à distance est divisée en plusieurs embranchements (9, 11) qui débouchent à diverses hauteurs du réservoir (10).

4.  Dispositif selon la revendication 1, caractérisé en ce que la plus grande partie des extrémités tubulaires des conduites d'amenée et de retour situées dans le réservoir en forme de tour (10) présentent des embouchures tournées vers le haut et recouvertes par des tôles de distribution (figure 3).

5.  Dispositif selon l'une quelconque des revendications 1 à 4, caractérisé en ce que des pompes de circulation opérant en fonction de la température et/ou des soupapes de réglage opérant en continu sont agencées dans les conduites d'amenée ou de retour des circuits individuels.

6.  Dispositif selon l'une quelconque des revendications 1, 4 et 5, caractérisé en ce que la hauteur du réservoir en forme de tour (10) est un multiple de son diamètre.

7.  Dispositif selon la revendication 6, caractérisé en ce que le rapport du diamètre à la hauteur du réservoir en forme de tour (10) est d'environ 1:7 à 1:10.

Fig. 1

Fig. 2

Fig. 3

EP 0 387 633 B1